# FASCICULE DE BREVET EUROPEEN

(11) **EP 3 165 416 B1**
(45) Date de publication et mention de la délivrance du brevet: **29.08.2018**
(21) Numéro de dépôt: 16192894.0
(22) Date de dépôt: 07.10.2016
(51) Int. Cl.: B60S 1/40

(54) **ADAPTATEUR POUR UN ESSUIE-GLACE DE VÉHICULE AUTOMOBILE**
ADAPTER FÜR EIN KRAFTFAHRZEUGWISCHERBLATT
ADAPTER FOR A MOTOR VEHICLE WINDSCREEN WIPER

(30) Priorité: 04.11.2015 FR 1560591
(43) Date de publication de la demande: 10.05.2017
(73) Titulaire: Valeo Systèmes d'Essuyage, 78322 Le Mesnil Saint Denis (FR)
(72) Inventeur: TERRASSE, William, 63270 VIC LE COMTE (FR); MOULEYRE, Guillaume, 63122 Saint Genès Champanelle (FR)
(74) Mandataire: Vincent, Catherine Marie Marguerite

(56) Documents cités:
- EP-A1- 1 847 426
- DE-A1- 19 924 662
- DE-A1-102011 005 167
- DE-A1-102011 079 486

## Description

### DOMAINE TECHNIQUE

La présente invention concerne notamment un adaptateur pour un essuie-glace, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Chacun de ces organes (connecteur et adaptateur) comprend des moyens d'articulation configurés pour coopérer avec des moyens complémentaires de l'autre organe, pour définir au moins un axe transversal d'articulation des organes, qui est un axe d'articulation du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux parois latérales sensiblement parallèles de la pièce terminale. Le corps de l'adaptateur est relié à une extrémité à un carénage ou capotage, appelée couramment casquette, sur laquelle l'extrémité libre de la pièce terminale vient en butée. Enfin, le corps de l'adaptateur comprend en général un bouton d'actionnement qui est engagé par encliquetage élastique dans un orifice d'une paroi transversale de la pièce terminale, lorsque cette dernière est en butée sur la casquette, afin de verrouiller l'adaptateur vis-à-vis de la pièce terminale dans cette position.

Un adaptateur permet d'associer un balai à un type particulier de pièce terminale. Dans le cas des pièces terminales précitées à section en U, il en existe plusieurs variétés.

Il existe également un balai équipé d'une pièce terminale à verrouillage latéral. Cette pièce terminale est solidaire d'une tige cylindrique destinée à définir ledit axe d'articulation, et destinée à être engagée à rotation dans un orifice de forme complémentaire du corps de l'adaptateur ainsi que dans un orifice du connecteur.

Dans la technique actuelle, il existe autant de variétés d'adaptateur que de variétés de pièces terminales, ce qui n'est pas pratique ni économique. Il existe donc un réel besoin d'un adaptateur universel apte à être monté sur au moins deux, voire plus, pièces terminales de bras d'essuie-glace, et en particulier sur des pièces terminales de types différents.

L'invention propose une solution simple, efficace et économique à ce besoin.

Le document DE 10 2011 005 167 A montre un adaptateur pour essuie glace selon le préambule de la première revendication.

### EXPOSE DE L'INVENTION

L'invention propose à cet effet un adaptateur pour un essuie-glace, en particulier de véhicule automobile, ledit adaptateur étant destiné à relier un balai d'essuie-glace à une pièce terminale d'un bras d'entraînement, du type à verrouillage latéral et solidaire d'une tige cylindrique définissant un axe d'articulation de l'adaptateur vis-à-vis dudit balai, ledit adaptateur comprenant un corps longitudinal comprenant deux premières parois longitudinales latérales sensiblement parallèles et reliées l'une à l'autre par une paroi transversale, ledit corps étant relié à une extrémité longitudinale à un capotage de plus grande dimension transversale que celle dudit corps, caractérisé en ce que ledit capotage comporte un orifice transversal configuré pour recevoir ladite tige cylindrique.

L'adaptateur selon l'invention peut être considéré comme un adaptateur universel, et peut par exemple être utilisé pour raccorder un balai d'essuie-glace à une pièce terminale du type à section en U ou du type à verrouillage latéral. La pièce terminale en U peut être montée sur le corps de l'adaptateur, comme expliqué dans ce qui précède. La tige cylindrique de la pièce terminale à verrouillage latéral peut être engagée dans l'orifice de l'adaptateur, cette pièce terminale pouvant venir en appui contre l'une des parois du capotage.

L'adaptateur selon l'invention peut comprendre une ou plusieurs des caractéristiques suivantes, prises isolément ou en combinaison les unes avec les autres :
- ledit capotage comprend deux secondes parois longitudinales latérales sensiblement parallèles et traversées par ledit orifice,
- lesdites secondes parois latérales sont reliées l'une à l'autre par au moins une paroi transversale,
- lesdites secondes parois latérales s'étendent au moins en partie en regard desdites premières parois et sont écartées desdites premières parois pour définir au moins un logement destiné à recevoir une extrémité longitudinale d'une pièce terminale 'un second bras d'entraînement à section transversale sensiblement en U,
- lesdites secondes parois latérales définissent une première portion d'extrémité longitudinale de largeur L1 et une seconde portion d'extrémité longitudinale opposée de largeur L2, inférieure à L1 et supérieure à la largeur dudit corps,
- ledit orifice est sensiblement situé à la jonction desdites première et seconde portions d'extrémité,
- lesdites premières parois latérales sont traversées par ledit orifice,
- ledit corps comprend une rainure transversale qui s'étend sur ladite paroi transversale, entre lesdites premières parois transversales,
- ladite rainure s'étend à proximité d'un plan transversal perpendiculaire à un axe longitudinal de l'adaptateur et passant sensiblement par ledit orifice,
- lesdites premières parois latérales comprennent sur des faces latérales externes des nervures en saillie,
- ledit corps comprend des moyens élastiquement déformables d'encliquetage élastique, et
- ledit adaptateur comporte des moyens de liaison configurés pour coopérer avec ledit balai,
- lesdits moyens comprennent au moins un bouton d'actionnement situé dans une lumière ou fente de ladite paroi transversale.

La présente invention concerne encore un ensemble comportant un adaptateur tel que décrit précédemment et un bras d'entraînement, pour un essuie-glace, en particulier de véhicule automobile.

De préférence, ledit bras est du type à verrouillage latéral et est solidaire d'une tige cylindrique, ledit bras comportant une face latérale d'appui configurée pour coopérer par appui et/ou glissement avec une face latérale dudit capotage, et une patte en L dont un rebord définit une paroi latérale configurée pour coopérer par appui et/ou glissement avec une face latérale dudit corps.

La présente invention concerne également un ensemble comportant un adaptateur tel que décrit ci-dessus et un balai d'essuie-glace, en particulier de véhicule automobile.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace, un bras d'entraînement du balai, et un système de connexion du balai au bras,
- la figure 2 est une vue schématique en perspective et à plus grande échelle d'un bras à verrouillage latéral et d'un système de connexion comportant un adaptateur selon l'invention,
- la figure 3 est une vue schématique en perspective et à plus grande échelle d'un bras à chape en U et du système de connexion comportant l'adaptateur selon l'invention,
- les figures 4 à 6 sont des vues schématiques de l'adaptateur selon l'invention,
- les figures 7 et 8 sont des vues schématiques en perspective du bras et du système de connexion de la figure 2, et
- les figures 9 et 10 sont des vues schématiques en perspective du bras et de l'adaptateur de la figure 3.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

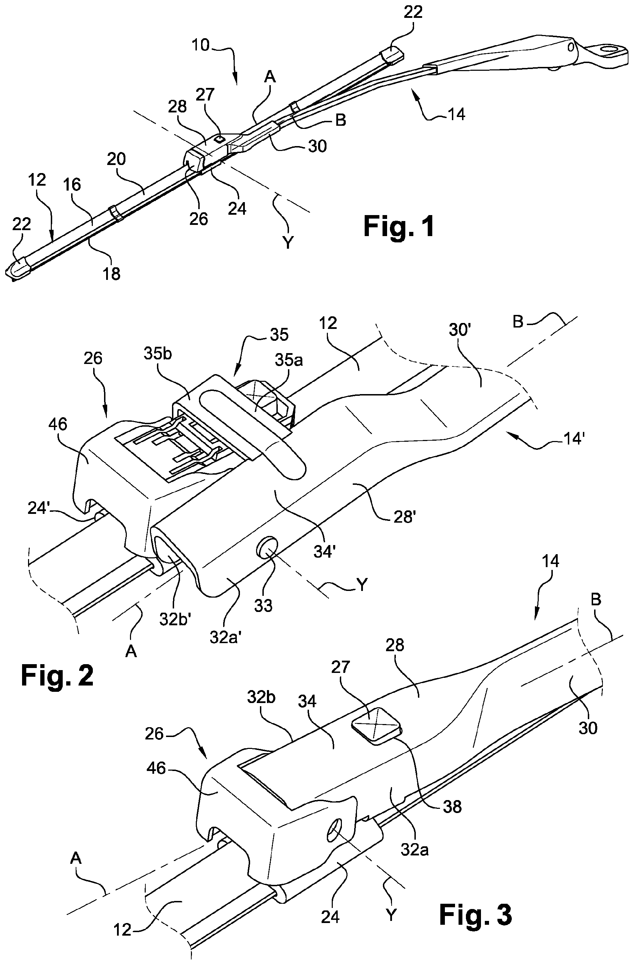

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton d'actionnement, ici un bouton poussoir 27, porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale 28 du bras qui peut être formée d'une seule pièce avec le bras ou rapportée et fixée sur celui-ci.

Dans l'exemple représenté, l'adaptateur 26 peut être relié à une pièce terminale 28' d'un premier bras 14', du type à verrouillage vertical, représenté en figure 2, et à une pièce terminale 28 d'un second bras 14, visible en figure 3, et qui forme une chape à section transversale sensiblement en U.

En figure 2, la pièce terminale 28' a une forme allongée dont l'axe d'allongement A est en général sensiblement parallèle à l'axe d'allongement ou longitudinal du balai 12. La pièce terminale 28' comprend une partie 30' de liaison au reste du bras 14', par exemple par sertissage. Cette partie 30' a une forme générale allongée et s'étend le long d'un axe B sensiblement parallèle à l'axe A et à distance de cet axe. La partie 30' est reliée à une extrémité arrière ou intérieure du reste de la pièce terminale 28'.

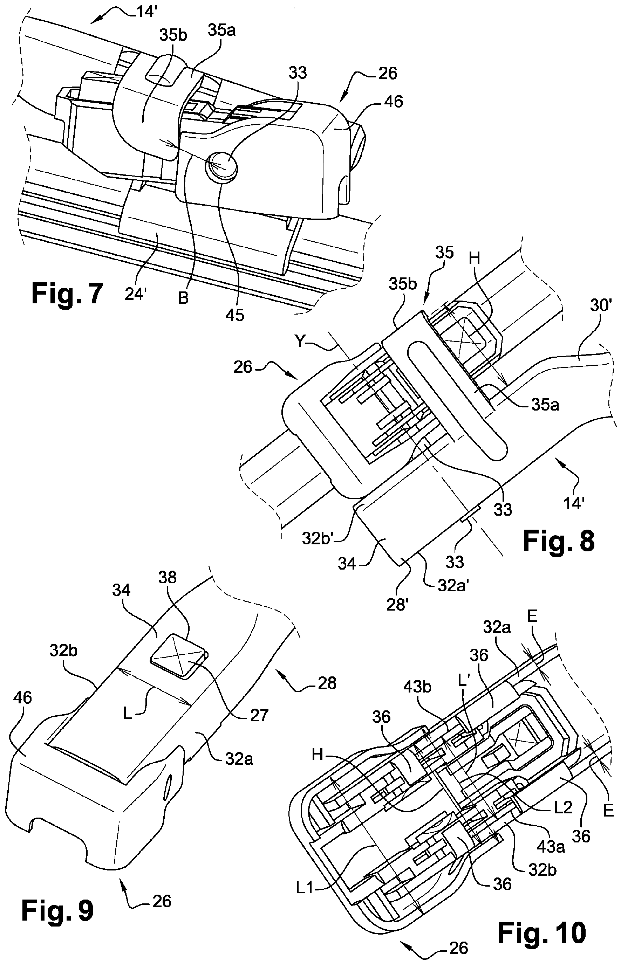

La pièce terminale 28' comprend deux parois latérales 32a', 32b' dont les bords longitudinaux supérieurs sont reliés entre eux par une paroi transversale supérieure 34'. Les parois 32a', 32b' sont solidaires d'une tige cylindrique 33 qui s'étend entre les parois 32a', 32b' et se prolonge latéralement ou transversalement au-delà de l'une des parois (à savoir la paroi 32b' dans l'exemple représenté - figures 7 et 8). La tige 33 définit ou s'étend le long de l'axe d'articulation Y.

La pièce terminale 28', et en particulier sa paroi supérieure 34', comprend une extension ou patte latérale 35 en forme de L. Cette patte 35 comprend une première portion 35a parallèle à la paroi supérieure 34' et s'étendant latéralement dans le prolongement de cette dernière. Elle a une forme allongée dont une extrémité longitudinale est reliée à la paroi supérieure et l'extrémité longitudinale opposée est reliée à une seconde portion 35b ou un rebord sensiblement perpendiculaire à la première portion.

Le rebord 35b s'étend sensiblement en regard de la paroi latérale 32b' et est situé à une distance transversale H de cette paroi. Cette distance H est mesurée entre les faces latérales en regard du rebord 35b et de la paroi 32b' (figure 8). La distance H est mesurée le long de l'axe Y. La distance la plus proche entre le rebord 35b et la tige 33, mesurée dans le plan dudit rebord 35b, est notée B (figure 7).

En figure 3, la pièce terminale 28 a une forme allongée dont l'axe d'allongement A est en général sensiblement parallèle à l'axe d'allongement ou longitudinal du balai 12. La pièce terminale 28 comprend une partie 30 de liaison au reste du bras 14, par exemple par sertissage. Cette partie 30 a une forme générale allongée et s'étend le long d'un axe B sensiblement parallèle à l'axe A et à distance de cet axe. La partie 30 est reliée à une extrémité arrière ou intérieure du reste de la pièce terminale 28.

La pièce terminale 28 comprend deux parois latérales 32a, 32b dont les bords longitudinaux supérieurs sont reliés entre eux par une paroi transversale supérieure 34. Les parois 32a, 32b et la paroi 34 délimitent entre elles un espace de logement de l'adaptateur 26. Les parois 32a, 32b comprennent au niveau de leurs bords longitudinaux inférieurs des moyens 36, tels que des crochets, de retenue de l'adaptateur 26 dans l'espace précité (figure 10).

La paroi supérieure 34 comprend une ouverture 38 traversante de forme complémentaire du bouton poussoir 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par simple engagement ou emboîtement, de préférence par encliquetage élastique.

On définit L comme étant la largeur ou dimension latérale de la pièce terminale 28, cette largeur (externe) L étant mesurée entre les parois 32a, 32b et plus exactement entre les faces externes de celles-ci. La largeur interne L' est mesurée entre les faces internes des parois 32a, 32b. Toute largeur est mesurée dans une direction sensiblement perpendiculaire à l'axe A et parallèle à la paroi 34. De plus, on définit par E, l'épaisseur de chaque paroi 32a, 32b, ce qui revient à l'épaisseur de la tôle utilisée pour fabriquer la pièce terminale lorsque celle-ci est obtenue par emboutissage.

Selon l'invention et comme représenté aux figures 2 et 3, l'adaptateur 26 est du type « universel » et est destiné à être monté indifféremment sur l'une ou l'autre des pièces terminales 28, 28'.

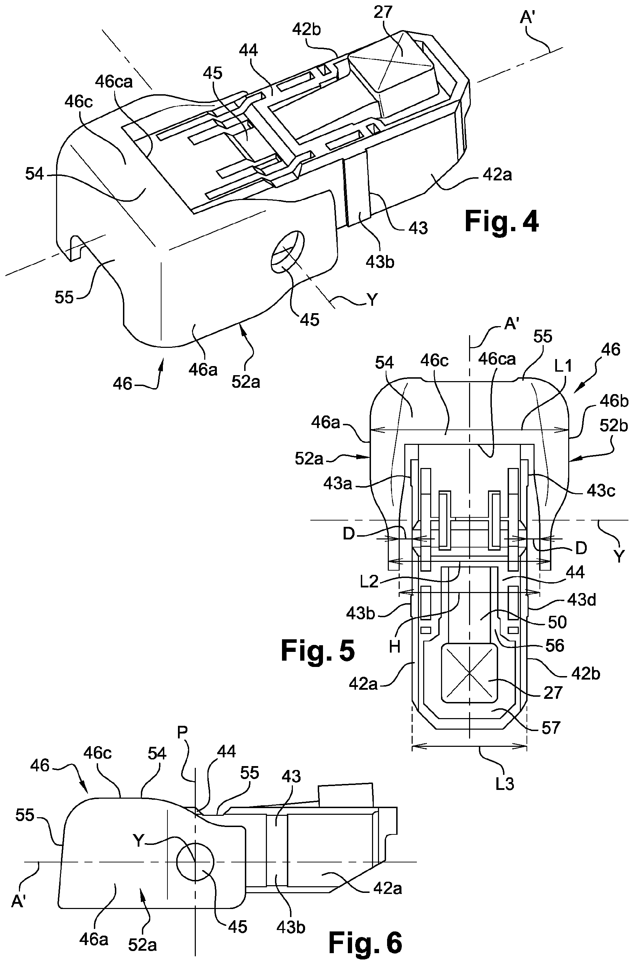

L'adaptateur 26, mieux visible aux figures 4 à 6, a une forme générale allongée le long de l'axe A'. Il comprend un corps comportant deux parois latérales 42a, 42b sensiblement parallèles entre elles et à l'axe A', et à distance l'une de l'autre. Ces parois 42a, 42b sont reliées entre elles à leurs extrémités supérieures par une paroi transversale supérieure 44 sensiblement perpendiculaire aux parois 42a, 42b. Les parois 42a, 42b, 44 ont ici une forme allongée en direction longitudinale.

Les parois 42a, 42b, 44 de l'adaptateur 26 définissent entre elles un espace longitudinal dans lequel est destinée à être montée une partie du connecteur 24, 24'. Dans le cas des figures 3, 9 et 10, le connecteur 24 porte un axe transversal de pivotement sensiblement cylindrique destiné à être emboîté par encliquetage élastique dans des logements de forme complémentaire des parois 42a, 42b du corps de l'adaptateur 26. Dans le cas des figures 2, 7 et 8 le connecteur 24' comprend un orifice transversal qui est destiné à être aligné avec un orifice 45 de l'adaptateur, et à recevoir la tige cylindrique 33 de la pièce terminale 28' du bras 14'.

Le corps de l'adaptateur 26 est relié à une première de ses extrémités longitudinales à un carénage ou capotage 46, aussi appelé casquette. Ce capotage 46 a une dimension latérale ou transversale supérieure à celle du corps de l'adaptateur et une hauteur également supérieure à celle du corps. Les parois latérales 42a, 42b du corps de l'adaptateur sont ainsi en retrait ou décalées par rapport à des faces latérales (externes) 46a, 46b du capotage 46, et sa paroi supérieure 44 est en retrait ou décalée par rapport à une face supérieure (externe) 46c du capotage.

La face supérieure 46c du capotage 46 est reliée à la paroi supérieure 44 du corps par une face arrière 46ca qui s'étend également perpendiculairement à l'axe A'.

La face arrière 46ca de la casquette 46 forme une face d'appui de l'extrémité extérieure ou avant de la pièce terminale 28. Plus précisément, en position montée de l'adaptateur 26 dans la pièce terminale 28, le bord libre avant de la paroi supérieure 34 de la pièce terminale 28 est destiné à venir en appui sur la face 48 (figure 3).

La paroi supérieure 44 du corps de l'adaptateur 26 comprend deux fentes longitudinales 56 parallèles entre elles et à l'axe A' et espacées l'une de l'autre. Elles définissent entre elles une languette longitudinale 50. Cette languette 50 est élastiquement déformable et est reliée à son extrémité libre arrière au bouton poussoir 27 précité. A l'état libre sans contrainte, la languette 50 est telle que le bouton poussoir 27 est en saillie sur la paroi supérieure 44. Le bouton poussoir 27 est situé dans un logement 57 de la paroi supérieure 44 du corps, relié aux fentes 56 précitées.

Le capotage 46 comprend des parois latérales 52a, 52b sensiblement parallèles entre elles et à l'axe A'. Ces parois s'étendent de part et d'autre du corps et sont écartées latéralement de ce corps pour autoriser l'insertion des parois latérales 32a, 32b de la pièce terminale 28 entre le corps et les parois latérales 52a, 52b.

Les parois 52a, 52b sont reliées entre elles à leurs extrémités supérieures par une paroi transversale supérieure 54 sensiblement perpendiculaire aux parois 52a, 52b. Les parois 52a, 52b ont ici une forme allongée en direction longitudinale. Les parois 52a, 52b sont également reliées entre elles à leurs extrémités avant ou extérieure par une paroi transversale avant 55 sensiblement perpendiculaire aux parois 52a, 52b.

Les parois 52a, 52b s'étendent vers l'arrière depuis la paroi avant 55. Les parois 52a, 52b sont écartées latéralement des parois latérales 42a, 42b du corps et définissent avec celles-ci des logements latéraux de réception des parois latérales de la pièce terminale 28.

La paroi 52a est en regard de la paroi 42a du corps et est écartée de celle-ci d'une distance transversale D, supérieure ou égale à E. La paroi 52b est en regard de la paroi 42b du corps et est écartée de celle-ci d'une même distance transversale D, supérieure ou égale à E.

Par ailleurs, on note L1, la distance ou dimension latérale maximale entre les faces externes 46a, 46b des parois latérales 52a, 52b du capotage, et H, la distance ou dimension latérale minimale entre les (faces internes) des parois latérales 52a, 52b.

Dans l'exemple représenté, H est supérieure ou égale à L. De plus, D est supérieure à E.

Les parois latérales 52a, 52b définissent une première portion d'extrémité longitudinale de largeur L1 et une seconde portion d'extrémité longitudinale opposée de largeur L2, inférieure à L1. L1 et L2 sont supérieurs à L et à la largeur L3 du corps.

Les parois 52a, 52b comprennent chacune une portion de l'orifice 45 définissant l'axe Y. Comme on le voit notamment à la figure 6, les parois 52a, 52b et les 42a, 42b comprennent des portions d'orifice 45. Autrement dit, elles sont traversées par le même orifice 45, qui définit l'axe d'articulation Y.

Dans l'exemple représenté, l'orifice 45 est sensiblement situé à la jonction desdites première et seconde portions d'extrémité des parois 52a, 52b.

Le corps comprend ici une rainure transversale 55 qui s'étend sur sa paroi supérieure 44, entre les parois latérales 42a, 42b. Cette rainure 55 s'étend à proximité d'un plan transversal P perpendiculaire à l'axe longitudinal A' de l'adaptateur et passant sensiblement par l'orifice 45.

De plus, les parois latérales 42a, 42b comprennent sur leurs faces latérales externes des nervures en saillie 43. Chaque paroi 42a, 42b comprend deux nervures en saillie écartées longitudinalement l'une de l'autre, et définissant des faces latérales 43a, 43b, 43c, 43d destinées à coopérer par glissement avec la pièce terminale 28 ou 28'. Les faces de glissement avant 43a, 43c et arrière 43b, 43d coopèrent de préférence avec les faces internes des parois latérales 32a, 32b de la pièce terminale 28. L' est alors sensiblement égal à L3. Les faces externes de ces parois 32a, 32b peuvent coopérer par glissement avec les faces internes des secondes portions d'extrémité du capotage 46.

Lorsque l'adaptateur 26 est engagé dans la pièce terminale 28, par translation axiale, de l'avant vers l'arrière, le long de l'axe A, les parois 32a, 32b de la pièce terminale 28 s'étendent de part et d'autre du corps de l'adaptateur et affleurent ses parois latérales 42a, 42b, voire sont en contact avec celles-ci. Les crochets 36 de la pièce terminale s'insèrent sous le corps de l'adaptateur pour le maintenir dans la pièce terminale 28. Enfin, la pièce terminale 28 est en appui par le bord avant de sa paroi supérieure 34 sur la face arrière 46ca du capotage 46, et le bouton poussoir 27 est engagé dans l'ouverture 38 de la pièce terminale. En position montée, les axes A et A' sont sensiblement confondus.

Comme on le voit aux figures 7 et 8, la paroi latérale 32b' de la pièce terminale 28' est destinée à coopérer par glissement avec la face latérale externe 46a de la paroi latérale 52a du capotage 46. Le rebord 35b de la pièce terminale 28' est destiné à coopérer par glissement avec la face arrière 43d de la paroi latérale 42b du corps de l'adaptateur 26. Le bras 14' est monté sur l'adaptateur 26 de la façon suivante. La pièce terminale 28' est disposée sur le côté de l'adaptateur 26 et la tige cylindrique 33 est alignée sur l'orifice 45 de l'adaptateur 26. La pièce terminale est déplacée vers l'adaptateur par translation le long de l'axe Y, la pièce terminale étant orientée autour de l'axe Y vis-à-vis de l'adaptateur de sorte que son rebord 35b passe au-dessus de la paroi supérieure 44 du corps. Ceci est autorisé par la distance B précitée. Cette translation est effectuée jusqu'à ce que la paroi latérale 32b' vienne en appui latéral sur la face 46a du capotage. Le bras 14' est ensuite déplacé en rotation autour de l'axe Y vis-à-vis de l'adaptateur 26, jusqu'à ce que le rebord 35b coopère par glissement avec la face arrière 43d du corps, comme cela est représenté aux figures 7 et 8. H est sensiblement égal à L3 + ((L1-L3)/2) de façon à ce que la paroi 32b' et le rebord 35b de la pièce terminale 28' coopèrent respectivement avec les faces 46a, 43d de l'adaptateur 26. En position montée, les axes A et A' sont parallèles et distants l'un de l'autre.

## Revendications

1. Adaptateur (26) pour un essuie-glace (10), en particulier de véhicule automobile, ledit adaptateur étant destiné à relier un balai (12) d'essuie-glace à une pièce terminale (28') d'un premier bras d'entraînement (14'), du type à verrouillage latéral et solidaire d'une tige cylindrique (33) définissant un axe d'articulation de l'adaptateur vis-à-vis dudit balai, ledit adaptateur comprenant un corps longitudinal comprenant deux premières parois longitudinales latérales (42a, 42b) sensiblement parallèles et reliées l'une à l'autre par une paroi transversale (44), ledit corps étant relié à une extrémité longitudinale à un capotage (46), l'adaptateur étant **caractérisé en ce que** le capotage étant de plus grande dimension transversale (L1, L2) que celle (L3) dudit corps, et **en ce que** ledit capotage comporte un orifice transversal (45) configuré pour recevoir ladite tige cylindrique.

2. Adaptateur (26) selon la revendication 1, dans lequel ledit capotage (46) comprend deux secondes parois longitudinales latérales (52a, 52b) sensiblement parallèles et traversées par ledit orifice (45).

3. Adaptateur (26) selon la revendication 2, dans lequel lesdites secondes parois latérales (52a, 52b) sont reliées l'une à l'autre par au moins une paroi transversale (54, 55).

4. Adaptateur (26) selon la revendication 2 ou 3, dans lequel lesdites secondes parois latérales (52a, 52b) s'étendent au moins en partie en regard desdites premières parois (42a, 42b) et sont écartées desdites premières parois pour définir au moins un logement destiné à recevoir une extrémité longitudinale d'une pièce terminale (28) d'un second bras d'entraînement (14) à section transversale sensiblement en U.

5. Adaptateur (26) selon l'une des revendications 2 à 4, dans lequel lesdites secondes parois latérales (52a, 52b) définissent une première portion d'extrémité longitudinale de largeur L1 et une seconde portion d'extrémité longitudinale opposée de largeur L2, inférieure à L1 et supérieure à la largeur dudit corps.

6. Adaptateur (26) selon la revendication 5, dans lequel ledit orifice (45) est sensiblement situé à la jonction desdites première et seconde portions d'extrémité.

7. Adaptateur (26) selon l'une des revendications précédentes, dans lequel lesdites premières parois latérales (42a, 42b) sont traversées par ledit orifice (45).

8. Adaptateur (26) selon l'une des revendications précédentes, dans lequel ledit corps comprend une rainure transversale (55) qui s'étend sur ladite paroi transversale (44), entre lesdites premières parois transversales (42a, 42b).

9. Adaptateur (26) selon la revendication précédente, dans lequel ladite rainure (55) s'étend à proximité d'un plan transversal (P) perpendiculaire à un axe longitudinal (A') de l'adaptateur et passant sensiblement par ledit orifice (45).

10. Adaptateur (26) selon l'une des revendications précédentes, dans lequel lesdites premières parois latérales (42a, 42b) comprennent sur des faces latérales externes des nervures en saillie (43).

11. Adaptateur (26) selon l'une des revendications précédentes, dans lequel ledit corps comprend des moyens (27) élastiquement déformables d'encliquetage élastique.

12. Adaptateur (26) selon la revendication précédente, dans lequel lesdits moyens comprennent au moins un bouton d'actionnement (27) situé dans une lumière ou fente (56, 57) de ladite paroi transversale (44).

13. Ensemble comportant un adaptateur (26) selon l'une des revendications précédentes et un bras d'entraînement (14, 14'), pour un essuie-glace, en particulier de véhicule automobile.

14. Ensemble selon la revendication 13, dans lequel ledit bras (14') est du type à verrouillage latéral et est solidaire d'une tige cylindrique (33), ledit bras comportant une paroi latérale (32b') configurée pour coopérer par appui et/ou glissement avec une face latérale externe (46a) dudit capotage (46), et une patte (35) en L dont un rebord (35b) définit une face latérale d'appui configurée pour coopérer par appui et/ou glissement avec une face latérale (43d) dudit corps.

15. Ensemble comportant un adaptateur (26) selon l'une des revendications 1 à 12 et un balai (12) d'essuie-glace, en particulier de véhicule automobile.

## Patentansprüche

1. Adapter (26) für einen Scheibenwischer (10), insbesondere eines Kraftfahrzeugs, wobei der Adapter dazu bestimmt ist, ein Scheibenwischerblatt (12) mit einem Endstück (28') eines ersten Antriebsarms (14') zu verbinden, der von der Art mit seitlicher Verriegelung und mit einem zylindrischen Schaft (33), der eine Gelenkachse des Adapters gegenüber dem Blatt definiert, fest verbunden ist, wobei der Adapter einen Längskörper umfasst, der zwei erste Längsseitenwände (42a, 42b) umfasst, die im Wesentlichen parallel und durch eine Querwand (44) miteinander verbunden sind, wobei der Körper an einem Längsende mit einer Abdeckung (46) verbunden ist, wobei der Adapter **dadurch gekennzeichnet ist, dass** die Abdeckung von einer größeren Querabmessung (L1, L2) als die (L3) des Körpers ist, und dadurch, dass die Abdeckung eine Queröffnung (45) aufweist, die dazu ausgelegt ist, den zylindrischen Schaft aufzunehmen.

2. Adapter (26) nach Anspruch 1, wobei die Abdeckung (46) zwei zweite Längsseitenwände (52a, 52b) umfasst, die im Wesentlichen parallel sind und durch die Öffnung (45) durchquert werden.

3. Adapter (26) nach Anspruch 2, wobei die zweiten Seitenwände (52a, 52b) durch zumindest eine Querwand (54, 55) miteinander verbunden sind.

4. Adapter (26) nach Anspruch 2 oder 3, wobei die zweiten Seitenwände (52a, 52b) sich zumindest teilweise gegenüber den ersten Wänden (42a, 42b) erstrecken und von den ersten Wänden beabstandet sind, um zumindest einen Raum zu definieren, der dazu bestimmt ist, ein Längsende eines Endstücks (28) eines zweiten Antriebsarms (14) mit einem im Wesentlichen U-förmigen Querschnitt aufzunehmen.

5. Adapter (26) nach einem der Ansprüche 2 bis 4, wobei die zweiten Seitenwände (52a, 52b) einen ersten Längsendabschnitt der Breite L1 und einen gegenüberliegenden zweiten Längsendabschnitt der Breite L2, die kleiner als L1 und größer als die Breite des Körpers ist, definieren.

6. Adapter (26) nach Anspruch 5, wobei sich die Öffnung (45) im Wesentlichen an der Verbindung des ersten und des zweiten Endabschnitts befindet.

7. Adapter (26) nach einem der vorangehenden Ansprüche, wobei die ersten Seitenwände (42a, 42b) durch die Öffnung (45) durchquert werden.

8. Adapter (26) nach einem der vorangehenden Ansprüche, wobei der Körper eine Quernut (55) umfasst, die sich auf der Querwand (44) zwischen den ersten Querwänden (42a, 42b) erstreckt.

9. Adapter (26) nach dem vorangehenden Anspruch, wobei sich die Nut (55) nahe einer Querebene (P) erstreckt, die senkrecht zu einer Längsachse (A') des Adapters ist und im Wesentlichen durch die Öffnung (45) verläuft.

10. Adapter (26) nach einem der vorangehenden Ansprüche, wobei die ersten Seitenwände (42a, 42b) auf den äußeren Seitenflächen hervorragende Rippen (43) umfassen.

11. Adapter (26) nach einem der vorangehenden Ansprüche, wobei der Körper Mittel (27) umfasst, die durch elastisches Einrasten elastisch verformbar sind.

12. Adapter (26) nach dem vorangehenden Anspruch, wobei die Mittel zumindest einen Betätigungsknopf (27) umfassen, der sich in einem Loch oder Spalt (56, 57) der Querwand (44) befindet.

13. Baugruppe, umfassend einen Adapter (26) nach einem der vorangehenden Ansprüche und einen Antriebsarm (14, 14') für einen Scheibenwischer, insbesondere eines Kraftfahrzeugs.

14. Baugruppe nach Anspruch 13, wobei der Arm (14') von der Art mit seitlicher Verriegelung ist und mit einem zylindrischen Schaft (33) fest verbunden ist, wobei der Arm eine Seitenwand (32b'), die dazu ausgelegt ist, durch Aufliegen und/oder Gleiten mit einer äußeren Seitenfläche (46a) der Abdeckung (46) zusammenzuwirken, und eine L-förmige Lasche (35), wovon ein Rand (35b) eine seitliche Auflagefläche definiert, die dazu ausgelegt ist, durch Auflage und/oder Gleiten mit einer Seitenfläche (43d) des Körpers zusammenzuwirken, aufweist.

15. Baugruppe, umfassend einen Adapter (26) nach einem der Ansprüche 1 bis 12 und ein Scheibenwischerblatt (12), insbesondere eines Kraftfahrzeugs.

## Claims

1. Adapter (26) for a windscreen wiper (10), in particular a motor vehicle windscreen wiper, said adapter being intended to connect a wiper blade (12) to an end piece (28') of a first driving arm (14'), of the laterally locking type that is secured to a cylindrical rod (33) that defines an articulation axis of the adapter with respect to said blade, said adapter comprising a longitudinal body comprising two substantially parallel first longitudinal lateral walls (42a, 42b) that are connected together by a transverse wall (44), said body being connected at one longitudinal end to a cowling (46), the adapter being **characterized in that** the cowling (46) has a transverse dimension (L1, L2) larger than that (L3) of said body, and **in that** said cowling has a transverse orifice (45) configured to receive said cylindrical rod.

2. Adapter (26) according to claim 1, wherein said cowling (46) comprises two substantially parallel second longitudinal lateral walls (52a, 52b), through which said orifice (45) passes.

3. Adapter (26) according to claim 2, wherein said second lateral walls (52a, 52b) are connected together by at least one transverse wall (54, 55).

4. Adapter (26) according to claim 2 or 3, wherein said second lateral walls (52a, 52b) extend at least in part in a manner facing said first walls (42a, 42b) and are spaced apart from said first walls so as to define at least one housing intended to receive a longitudinal end of an end piece (28) of a second driving arm (14) having a substantially U-shaped cross section.

5. Adapter (26) according to one of claims 2 to 4, wherein said second lateral walls (52a, 52b) define a first longitudinal end portion of width L1 and a second, opposite longitudinal end portion of width L2, which is less than L1 and greater than the width of said body.

6. Adapter (26) according to claim 5, wherein said orifice (45) is situated more or less at the junction between said first and second end portions.

7. Adapter (26) according to one of the preceding claims, wherein said first lateral walls (42a, 42b) are passed through by said orifice (45).

8. Adapter (26) according to one of the preceding claims, wherein said body comprises a transverse groove (55) which extends in said transverse wall (44), between said first transverse walls (42a, 42b).

9. Adapter (26) according to the preceding claim, wherein said groove (55) extends close to a transverse plane (P) that is perpendicular to a longitudinal axis (A') of the adapter and passes substantially through said orifice (45).

10. Adapter (26) according to one of the preceding claims, wherein said first lateral walls (42a, 42b) comprise protruding ribs (43) on external lateral faces.

11. Adapter (26) according to one of the preceding claims, wherein said body comprises elastically deformable means (27) for elastic snap-fitting.

12. Adapter (26) according to the preceding claim, wherein said means comprise at least one actuation button (27) that is situated in a hole or slot (56, 57) in said transverse wall (44).

13. Assembly comprising an adapter (26) according to one of the preceding claims and a driving arm (14, 14'), for a windscreen wiper, in particular a motor vehicle windscreen wiper.

14. Assembly according to claim 13, wherein said arm (14') is of the laterally locking type and is secured to a cylindrical rod (33), said arm having a lateral wall (32b') configured to cooperate with an external lateral face (46a) of said cowling (46) by bearing and/or sliding, and an L-shaped tab (35), one lip (35b) of which defines a lateral bearing face configured to cooperate with a lateral face (43d) of said body by bearing and/or sliding.

15. Assembly comprising an adapter (26) according to one of claims 1 to 12 and a blade (12) for a windscreen wiper, in particular a motor vehicle windscreen wiper.
